# EUROPEAN PATENT SPECIFICATION

(11) **EP 4 146 498 B1**
(45) Date of publication and mention of the grant of the patent: **21.01.2026**
(21) Application number: 21867508.0
(22) Date of filing: 08.09.2021
(51) Int. Cl.: B60N 2/02, B60N 2/00, B60N 2/06

(54) **VEHICLE SEAT POSITION ADJUSTMENT SYSTEM**
FAHRZEUGSITZPOSITIONSEINSTELLSYSTEM
SYSTÈME DE RÉGLAGE DE POSITION DE SIÈGE DE VÉHICULE

(30) Priority: 09.09.2020 US 202063076029 P
(43) Date of publication of application: 15.03.2023
(73) Proprietor: Sears Manufacturing Co., Davenport, Iowa 52808 (US)
(72) Inventor: SVITAK, Tylor, MOLINE, Illinois 61244 (US); EVANS, Eric, DAVENPORT, Iowa 52806 (US); NAIR, Vikram, BETTENDORF, Iowa 52722 (US); LINNBERG, Jeffrey, BLUE GRASS, Iowa 52726 (US)
(74) Representative: FRKelly
(86) International application number: PCT/US2021/049455
(87) International publication number: WO 2022/055989

(56) References cited:
- DE-A1- 102019 103 652
- JP-A- 2009 279 997
- JP-A- 2013 177 051
- JP-A- 2015 212 106
- JP-A- 2015 212 106
- KR-A- 20140 081 059
- KR-A- 20140 081 059
- US-A1- 2014 277 952

## Description

### Technical Field

This invention relates to seats for vehicles, and more specifically to improvements in adjustment of vehicle seats for enhancing operator experience during ingress and egress of work vehicles.

### Background

This disclosure relates generally to vehicle seat adjustment systems, and more particularly to a system and method for automatically adjusting the position of a vehicle seat based on operator absence.

Due to their size and configurations, many heavy duty vehicles, such as commercial semis, construction, and farm vehicles have operator seats placed in a manner that may make seats less ergonomic and convenient to enter and exit the seat and vehicle without effort. Although generally seats may be adjustable, many operators do not take the time to adjust the seat to make it easier for ingress or egress of the vehicle, especially if the operator will enter or leave again shortly.

Unlike in automotive vehicles, in work vehicles it is common for an operator to exit and enter the vehicle while the vehicle remains running. One reason this is done is to check or adjust features of the vehicle. Unfortunately, ergonomic exit and entry into these vehicles can be difficult based on the size of the vehicle, the position of the vehicle seat, and other vehicle components such as consoles. This lack of convenience and ergonomics felt by operators during ingress or egress can contribute to operator fatigue and general dissatisfaction.

Operator experience based on seat position during ingress and egress has not been addressed adequately in work vehicles. There is a need for an active automatic seat positioning adjustment system that provides maximum ease and comfort to an operator when they enter and exit the vehicle while it remains running. Document 1 DE102019103652A1 discloses a system for controlling the position of a vehicle seat, and a method for adjusting a seat.

### Summary

The present invention is directed to a vehicle seat adjustment system that adjusts a seat position in comparison to a desired seat position in response to a signal as to whether an operator is present or absent in the seat. The vehicle seat position adjustment system comprises a vehicle seat, an operator presence detection device, a seat and component adjustment controller and a controllable actuator all in operable communication.

A method for running the system is also contemplated.

Other aspects will become apparent by consideration of the detailed description and accompanying drawings.

### Description of the Drawings

**FIG. 1** is a block diagram of components of the vehicle seat position adjustment system.
**FIG. 2** is an exemplary seat of the vehicle seat position adjustment system showing input devices as buttons.
**FIG. 3** is a touchscreen input device of the vehicle seat position adjustment system.
**FIG. 4** is a flow chart of a method for seat and component position adjustment according to the present disclosure as implemented by the vehicle seat adjustment controller shown in FIG. 1.

### Detailed Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles disclosed herein as would normally occur to one skilled in the art to which this disclosure pertains
The vehicle seat and component position adjustment system of the present disclosure provides an automatic and interactive system for adjusting seat and console positioning to maximize operator comfort during vehicle ingress and egress. A vehicle seat and component positioning adjustment system based on operator presence is disclosed. This system can be adapted to many different types of motorized seats. In an embodiment, a vehicle seat and component position adjustment system for use with a vehicle includes within communication with each other, a vehicle seat, a seat and component position controller, a controllable actuator and an operator presence detection device. The operator presence detection device is operable to transmit signals to the controller and the controller is operable to instruct the controllable actuators to adjust the position of internal vehicle components such as a seat or a console. This adjustment is dependent upon operator preference or preprogrammed values. Adjustable vehicle components in this system may include, but are not limited to, the fore-aft position of a seat, the height of a seat, and the position of a console.

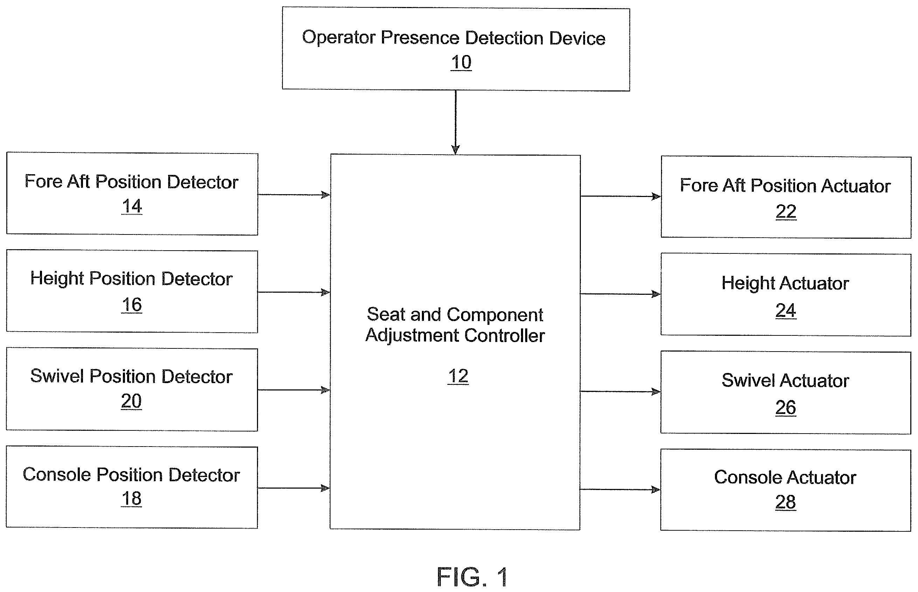

As shown in **Fig. 1****,** in one aspect of the vehicle seat and component position adjustment system, one or more operator presence detection devices provide information about the presence of an operator in a seat. An operator presence detection device **10** may be integrated into a seat or suspension. The detection device can be a switch or a sensor. In one embodiment, if operator presence detection device **10** is a switch, the switch detects the weight in the seat, which is obviously indicative of operator presence or absence. The operator presence detection device **10** can take a variety of forms capable of generating a signal for use by the seat and component position adjustment controller **12,** wherein the signal indicates the presence of an operator in the seat.

In certain embodiments, one or more seat and component position detection devices **14, 16, 18, 20** provide information regarding the position of the vehicle seat or vehicle component such as a console. In one embodiment, the seat and component position detection device is a fore-aft position detection device **14,** capable of determining and communicating the fore-aft position of the seat. In that or additional embodiments, a seat or component position detection device is a seat height position detection device 16, capable of determining the seat height position of the seat. In yet another embodiment, a console position detection device **18** is a seat and component detection device. In still another embodiment, a seat swivel position detection device 20 is contemplated.

Detection values for the seat position detection device values can be measured by a change in resistance or a change in magnetic field or by digital pulses or sonar. The skilled artisan understands that the type of measurement method or value of the measurement is not limiting as long as the measurement provides information relating to the actual position of the seat or component. For example, in one of the embodiments above, a potentiometer based on a sensor measures the position of the seat height. The sensor outputs a ratiometric voltage based on the supply voltage and sensor position. But other sensor outputs such as applicable current or digital outputs such as pulse width modulation (PWM), Inter-Integrated Circuit (I2C), Serial Peripheral Interface (SPI), controller area network (CAN), and Local Interconnect Network (LIN) are contemplated. As is understood by the skilled artisan, the seat and component position detection devices **14, 16, 18, 20** can be of a variety of types of detectors and can be integrated in a variety of ways as is known in the art. The only limiting factor is that the seat position and component detectors be able to sense the position of the seat in a fore-aft position, a height position, a swivel position or one or more of these positions, or be able to sense the position of a vehicle component such as a console. In one embodiment, a single detector will measure the position of the fore-aft and height position of the seat. In another embodiment, one detector will measure the fore-aft position of the seat and a separate detector will measure seat height. The number or type of detectors is not meant to be limiting. A single potentiometer detector may be advantageous in that it gives immediate precise feedback. In another embodiment, an accelerometer sensor may be used. However, in the embodiments where an accelerometer is used, because accelerometer data must be further converted for accurate position data, the data using an accelerometer may be off shifted from real time data. In yet another embodiment, several sensors can be used. Use of more than one sensor may be important when dealing with safety critical components and the potential of sensor failure are not acceptable. Examples include steer by wire or fly by wire systems.

The fore-aft position of a seat may be measured by the longitudinal position from a front end a of seat base to a reference point on vehicle floor towards the front of the vehicle (fore). However, other reference points can be used to measure a fore-aft position of vehicle seat, including any component in consistent movable relationship with the vehicle seat in combination with any component on or affixed to a static component of the vehicle.

Software or firmware within a processor, such as a processor within a vehicle seat and position adjustment controller **12,** is configured to receive a signal from detectors **14, 16, 18, 20** whether a current or a voltage signal, and determine the presence of an operator in the seat and a position of the seat or vehicle component from that signal, or at least determine a value indicative of the presence of an operator and/or the position of the seat and/or a vehicle component. Controller **12** then calculates and converts this raw signal into an engineering value. To determine seat position, the raw signal may be voltage corresponding to distance, such as millimeters, or a percentage of travel.

In many embodiments, the controller will have a timer **21.** A timer can account for situations where the operator gets out of a seat but still remains in the general operating area of the seat. It is also useful in situations where a large bump may trigger the operator presence device10 because the operator temporarily leaves the seat. The timer value may be predetermined or user adjustable, or in certain embodiments, both. In embodiments with a timer, the timer value would need to expire before controller 12 directs the actuators to move to positions to aid ingress or egress. Example timer values include 0, .1, .25, 1, and 10 seconds, although these values are not meant to be limiting. Any value within this span is also contemplated. As are higher values, such as those that may be particularly advantageous for operators with disability. If the timer value expires and is reset, there is no requirement that the next timer value be the same value. This is also true if the timer value does not expire and the timer is reset. For example, the first timer value may be 10 seconds but the second timer value may be only 5 seconds.

Controller **12** can communicate with the various components of the system directly or indirectly. For direct communication, the components, such as detectors **10, 14, 16, 18** can be connected directly to controller **12** by appropriate wiring. Communication with controller **12** can be based on analog or digital signals and can follow a variety of communications protocols, such as LIN, CAN, UART, SPI and the like. Alternatively, the communication between controller **12** and certain components can be wireless using a variety of known wireless communication protocols.

As shown herein, a single controller **12** is disclosed. However, there is no limitation on the number of controllers in the system. For example, two controllers may be present such as a parent/child. In this situation, a controller may collect the data but wait for instruction from a master controller before directing movement of the actuators. And in yet another embodiment, one controller may collect the position information but another controller is responsible for directing movement of the actuators. In yet another embodiment, there may be one parent controller and several child controllers, i.e. in the event that the vehicle has more than a single seat.

The vehicle seat position adjustment system according to the present disclosure is implemented through one or more controllable actuators **22, 24, 26, 28.** Controller **12** signals an actuator to move a vehicle seat or a vehicle component relative to the vehicle floor in response to receipt of a signal from at least the operator presence detector. If an operator is not detected, controller **12** directs the actuator to move the vehicle seat to a set position relative to the vehicle floor. This position corresponds to a maximization of operator experience for entering and exiting the seat. This position can be a fore-aft position, height position, or swivel position or more than one of these positions. Generally any actuator, such as an electric motor, that results in automatic seat or component position adjustment upon receiving a signal from controller **12** is contemplated herein. In one embodiment, controllable actuators include power systems such as motors connected to a seat for moving the base of the seat. In other embodiments, controllable actuators include those power systems in association with power systems capable of raising or lowering seat height.

In one embodiment, depending on the type of vehicle, if the operator presence detector **10** determines that an operator is not present, this information is communicated to controller **12,** and controller **12** signals actuators **20/22** to lower the seat and place it in its furthest aft position, i.e. away from the front of the vehicle. In a different embodiment, only the height of the seat is changed. For example, to make ingress/egress into the seat more convenient, a controllable slide actuator 22 may move a seat as far aft as possible when the operator presence detection device communicates to the controller that there is no longer an operator present in the seat. In many work vehicles, moving the seat completely back makes it more convenient for an operator to reenter the vehicle in the event they have left the vehicle while it is still running. In certain embodiments, the seat will continue to have power, which could be for a set period of time, regardless of the power status of the vehicle. However, it is to be understood that there is no requirement that the seat be moved to a completely aft position when an operator is no longer in the seat. Any position along which the seat may travel in fore-aft position may be chosen. Seat height and seat swivel may also be adjusted along a continuum.

Another actuator, which can adjust either independently or with a fore-aft seat actuator **22,** includes a seat height actuator **24.** Seat height actuators are well known in the art and will not be discussed in further detail herein. However, it should be understood that a seat height actuator may include one or more components used in a seat height adjustment, for example, a solenoid, compressor, or the like. A skilled artisan understands that any seat height actuator capable of responding to a signal from the controller and adjusting the height of the vehicle seat may be used.

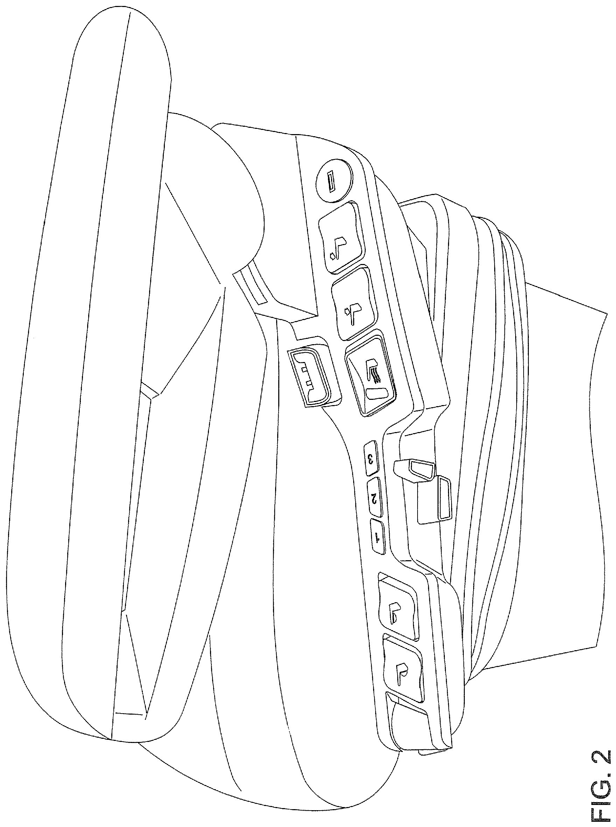

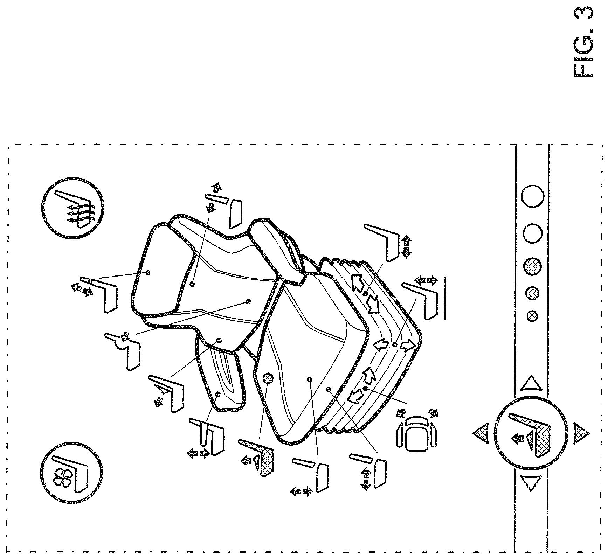

Controller **12** signal is transmitted to actuators **22, 24, 26, 28** based on the presence or absence of an operator in the seat. In one embodiment, the controller signal is transmitted independently of the running status of the vehicle. In yet another embodiment, the controller signal may be transmitted manually by the operator through an input device, such as a knob or touch screen. Examples of knobs are demonstrated in **Fig. 2****.** An example of a touch screen is demonstrated in **Fig. 3****.** If a touch screen is present in the system, an operator can set a desired seat position when the seat is occupied and a desired position for when the seat is empty through a human machine interface (HMI), and the resulting signal is sent to controller **12** to direct seat or component position actuators **22, 24, 26, 28** to adjust the seat to the desired position. In such a case, the operator may change the seat position while sitting in the vehicle seat and override any preprogrammed values based on seat occupancy. Further, in any of the embodiments, the positioning of the seat may be pre-set based upon the operator's preferences and stored within controller **12** such that an operator does not have to adjust the positioning of the seat each time the operator occupies the vehicle seat. These pre-set values may be entered through the use of input devices such as those shown in **Fig. 2** and **Fig. 3****.**

If an operator sets preferences for seat position in the system, those preferences may be stored in memory so that based on occupancy of the seat, a comparison is made to determine whether the desired position of the seat deviates from the current position of the seat. If the desired position is different, controller **12** signals to direct actuators **22, 24, 26, 28** to move the seat or vehicle component such as a console, to the desired position. Various settings may be storable within controller **12** and activated by the operator when desired. Storing various settings within the controller may allow more than one operator of the vehicle to store his/her respective desired seat settings.

If the seat position has been changed based on absence of the operator from the seat, when the operator again occupies the seat and his or her presence has once again been determined, the controller will compare the desired positions of the seat to the current positions and signal to controllable actuators to move the seat to the desired positions if there is a difference between the current positions and desired positions.

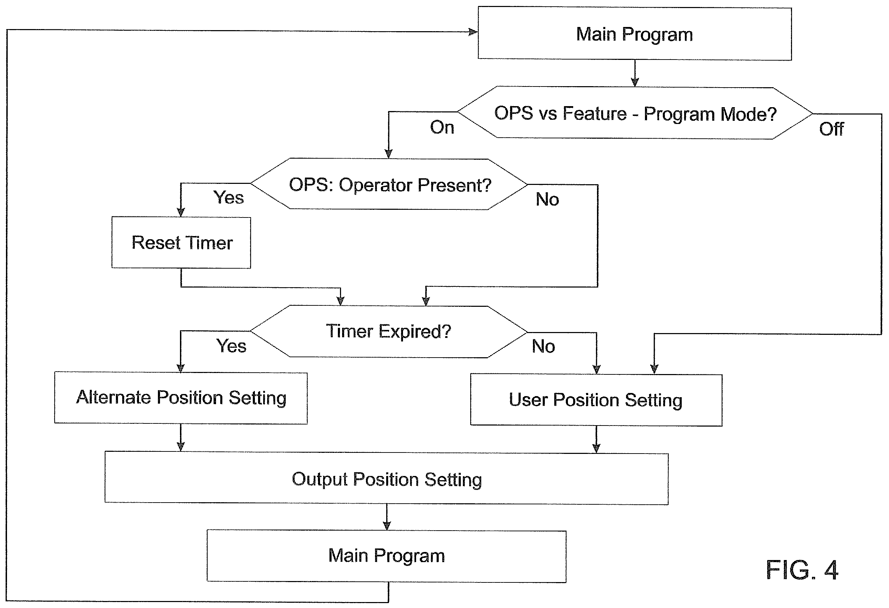

In one embodiment, controller **12** directs the steps according to the flowchart shown in **FIG. 4****.**

As shown in **Fig. 4****,** in a first set of steps, controller **12** determines if the vehicle seat and component position adjustment system is functioning. (Step 1). If the system is functional, controller **12** then receives or collects a value or signal generated by the operator presence detector **10** (Step 2). If the operator is not present, timer **21** begins (Step 3). If timer **21** expires (Step 4) without the operator's presence in the seat, controller **12** directs controllable actuators **22, 24, 26, 28** to move the seat to its alternative position, which has been optimized for ingress and egress or previously set by the operator (Step 5). If the operator is in the seat or occupies the seat before the expiration of the timer value for timer **21,** controller **12** resets timer **21** in a feedback loop and the seat remains in its operator presence setting (Step 5).

In one example, the operator presence detector **10** signals to controller **12** a value indicative of the presence of a vehicle operator in the seat, rather than a lighter object on the seat such as a cat or a package. In this instance, controller **12** converts the signal from the operator presence detector **10** to a value that can be compared to a threshold value denoting an operator. This threshold value can be stored in a memory of controller **12.**

If controller **12** determines that no operator is present, then there is no need to modify the height of the seat. If no operator is present, the seat height is not adjusted, and actuators **22, 24, 26, 28** are deactivated (Step **6**).

In one embodiment, when the vehicle is on, controller **12** is configured to continuously run through the steps demonstrated by the flowchart loop of **Fig. 4****.** In certain scenarios, an operator must only turn the key to power on the system. In other examples, the vehicle provides power to the system without an operator present, such as through the use of remote start. In some situations, pre-adjustment prior to the operator occupying the seat is desired.

## Claims

1. A system for controlling the position of a vehicle seat, comprising
a vehicle seat, an operator presence detection device (10), a seat and component position detection device (14, 16, 18, 20), a seat and component adjustment controller (12), and at least one controllable actuator (22, 24, 26, 28), all constructed and configured in network communication;
wherein the operator presence detection device (10) measures an absence of an operator in the vehicle seat, further wherein the operator presence detection device (10) communicates the measured value to the seat and component adjustment controller (12);
wherein the seat and component position detection device (14, 16, 18, 20) measures a current value of at least one of a fore-aft position of the vehicle seat or a height position of the vehicle seat; further wherein the seat and component position detection device (14, 16, 18, 20) communicates the current measured value to the seat and component adjustment controller (12);
wherein the seat and component adjustment controller (12) compares the measured value from the operator presence detection device (10) to a set value to determine if an operator is present; further wherein if the seat and component adjustment controller (12) determines an operator is not present, the seat and component adjustment controller (12) compares the current value to a desired value and calculates a movement factor value; wherein the movement factor value determines the communication between the seat and component adjustment controller (12) and the at least one controllable actuator (22, 24, 26, 28) and a timing component (21) prevents unintended vehicle seat movement when the operator temporarily gets out of the vehicle seat but remains in vicinity around the vehicle seat.

2. The system of claim 1 further comprising a console.

3. The system of claim 1 wherein if the movement factor value is different than the desired value, the seat and component adjustment controller (12) signals the at least one controllable actuator (22, 24, 26, 28) to adjust the at least one of the fore-aft position or the height position of the vehicle seat to the desired value.

4. The system of claim 3 wherein the at least one controllable actuator (22, 24, 26, 28) moves the vehicle seat from a current position to a fully aft position.

5. The system of claim 1 wherein the operator presence detector device (10) is a sensor on the vehicle seat.

6. The system of claim 1 further comprising an input device.

7. The system of claim 6 wherein the input device is a memory in the seat and component adjustment controller (12) operable to store a desired fore-aft seat position or seat height position.

8. The system of claim 7, wherein the desired fore-aft seat position value, or the desired height seat position value or both is preloaded into the memory.

9. The system of claim 7, wherein the desired fore-aft seat position or desired seat height position is set by an operator.

10. The system of claim 1 further comprising a timer (21) of the timing component.

11. The system of claim 10 wherein the timer (21) has a time value of 0, .1, .25, 1, or 10 seconds.

12. The system of claim 11 wherein the seat and component adjustment controller (12) only signals the at least one controllable actuator (22, 24, 26, 28) after expiration of the time value.

13. The system of claim 12 wherein the seat and component adjustment controller (12) resets the time value of the timer (21) if the operator presence detector device (10) measures the presence of an operator prior to expiration of the time value.

14. A method for adjusting a seat comprising the steps of:
determining the absence of an operator in a vehicle seat;
determining if a timer (21) from the absence of the operator expired;
determining at least one of the current fore-aft position or height position of a vehicle seat;
calculating a movement factor value when the operator is absent;
activating a controllable actuator (22, 24, 26, 28) to move the vehicle seat to a desired position when the movement factor value is positive.

15. The method of claim 14 wherein the desired position is a full aft position.

## Patentansprüche

1. System zum Steuern der Position eines Fahrzeugsitzes, umfassend einen Fahrzeugsitz, eine Anwesenheitserfassungseinrichtung für Bediener (10), eine Sitz- und Komponentenpositionserfassungseinrichtung (14, 16, 18, 20), eine Sitz- und Komponentenverstellungssteuerung (12) und mindestens einen steuerbaren Aktuator (22, 24, 26, 28), alle konstruiert und ausgelegt in Netzwerkkommunikation;
wobei die Anwesenheitserfassungseinrichtung für Bediener (10) eine Abwesenheit eines Bedieners im Fahrzeugsitz misst, wobei ferner die Anwesenheitserfassungseinrichtung für Bediener (10) den Messwert an die Sitz- und Komponentenverstellungssteuerung (12) kommuniziert;
wobei die Sitz- und Komponentenpositionserfassungseinrichtung (14, 16, 18, 20) einen aktuellen Wert von mindestens einer Längsposition des Fahrzeugsitzes oder einer Höhenposition des Fahrzeugsitzes misst; wobei ferner die Sitz- und Komponentenpositionserfassungseinrichtung (14, 16, 18, 20) den aktuellen Messwert an die Sitz- und Komponentenverstellungssteuerung (12) kommuniziert;
wobei die Sitz- und Komponentenverstellungssteuerung (12) den Messwert von der Anwesenheitserfassungseinrichtung für Bediener (10) mit einem Sollwert vergleicht, um zu bestimmen, ob ein Bediener anwesend ist; wobei ferner, wenn die Sitz- und Komponentenverstellungssteuerung (12) bestimmt, dass ein Bediener nicht anwesend ist, die Sitz- und Komponentenverstellungssteuerung (12) den aktuellen Wert mit einem gewünschten Wert vergleicht und einen Bewegungsfaktorwert berechnet; wobei der Bewegungsfaktorwert die Kommunikation zwischen der Sitz- und Komponentenverstellungssteuerung (12) und dem mindestens einen steuerbaren Aktuator (22, 24, 26, 28) bestimmt und eine Zeitsteuerungskomponente (21) unbeabsichtigte Fahrzeugsitzbewegung verhindert, wenn der Bediener vorübergehend aus dem Fahrzeugsitz aussteigt, aber in der Nähe um den Fahrzeugsitz herum bleibt.

2. System nach Anspruch 1, ferner umfassend eine Konsole.

3. System nach Anspruch 1, wobei, wenn der Bewegungsfaktorwert unterschiedlich zum gewünschten Wert ist, die Sitz- und Komponentenverstellungssteuerung (12) dem mindestens einen steuerbaren Aktuator (22, 24, 26, 28) signalisiert, die mindestens eine Längsposition oder die Höhenposition des Fahrzeugsitzes auf den gewünschten Wert zu verstellen.

4. System nach Anspruch 3, wobei der mindestens eine steuerbare Aktuator (22, 24, 26, 28) den Fahrzeugsitz von einer aktuellen Position zu einer vollständig hinteren Position bewegt.

5. System nach Anspruch 1, wobei die Anwesenheitserfassungseinrichtung für Bediener (10) ein Sensor am Fahrzeugsitz ist.

6. System nach Anspruch 1, ferner umfassend ein Eingabegerät.

7. System nach Anspruch 6, wobei das Eingabegerät ein Speicher in der Sitz- und Komponentenverstellungssteuerung (12) ist, betreibbar zum Speichern einer gewünschten Längssitzposition oder Sitzhöhenposition.

8. System nach Anspruch 7, wobei der gewünschte Längssitzpositionswert oder der gewünschte Höhensitzpositionswert oder beide in den Speicher vorgeladen ist.

9. System nach Anspruch 7, wobei die gewünschte Längssitzposition oder gewünschte Sitzhöhenposition von einem Bediener eingestellt wird.

10. System nach Anspruch 1, ferner umfassend einen Zeitgeber (21) der Zeitsteuerungskomponente.

11. System nach Anspruch 10, wobei der Zeitgeber (21) einen Zeitwert von 0, 0,1, 0,25, 1 oder 10 Sekunden hat.

12. System nach Anspruch 11, wobei die Sitz- und Komponentenverstellungssteuerung (12) dem mindestens einen steuerbaren Aktuator (22, 24, 26, 28) nur nach Ablauf des Zeitwerts signalisiert.

13. System nach Anspruch 12, wobei die Sitz- und Komponentenverstellungssteuerung (12) den Zeitwert des Zeitgebers (21) zurücksetzt, wenn die Anwesenheitserfassungseinrichtung für Bediener (10) die Anwesenheit eines Bedieners vor Ablauf des Zeitwerts misst.

14. Verfahren zum Verstellen eines Sitzes, umfassend die Schritte:
Bestimmen der Abwesenheit eines Bedieners in einem Fahrzeugsitz;
Bestimmen, ob ein Zeitgeber (21) ab der Abwesenheit des Bedieners abgelaufen ist;
Bestimmen von mindestens einer aktuellen Längsposition oder Höhenposition eines Fahrzeugsitzes;
Berechnen eines Bewegungsfaktorwerts, wenn der Bediener abwesend ist;
Aktivieren eines steuerbaren Aktuators (22, 24, 26, 28), um den Fahrzeugsitz zu einer gewünschten Position zu bewegen, wenn der Bewegungsfaktorwert positiv ist.

15. Verfahren nach Anspruch 14, wobei die gewünschte Position eine vollständig hintere Position ist.

## Revendications

1. Système de commande de la position d'un siège de véhicule, comprenant un siège de véhicule, un dispositif de détection de présence d'opérateur (10), un dispositif de détection de position de siège et de composants (14, 16, 18, 20), un contrôleur de réglage de siège et de composants (12), et au moins un actionneur contrôlable (22, 24, 26, 28), tous construits et configurés en communication réseau ;
dans lequel le dispositif de détection de présence d'opérateur (10) mesure l'absence d'un opérateur sur le siège du véhicule, dans lequel également le dispositif de détection de présence d'opérateur (10) communique la valeur mesurée au contrôleur de réglage de siège et de composants (12) ;
dans lequel le dispositif de détection de la position de siège et de composants (14, 16, 18, 20) mesure une valeur actuelle d'au moins une position avant-arrière du siège du véhicule ou d'une position en hauteur du siège du véhicule ; dans lequel le dispositif de détection de position de siège et de composants (14, 16, 18, 20) communique également la valeur mesurée actuelle au contrôleur de réglage de siège et de composants (12) ;
dans lequel le contrôleur de réglage de siège et de composants (12) compare la valeur mesurée par le dispositif de détection de présence d'opérateur (10) à une valeur de consigne afin de déterminer si un opérateur est présent ; dans lequel également, si le contrôleur de réglage de siège et de composants (12) détermine qu'aucun opérateur n'est présent, le contrôleur de réglage de siège et de composants (12) compare la valeur actuelle à une valeur souhaitée et calcule une valeur de facteur de mouvement ; dans lequel la valeur de facteur de mouvement détermine la communication entre le contrôleur de réglage de siège et de composants (12) et le au moins un actionneur contrôlable (22, 24, 26, 28), et un composant de temporisation (21) empêche tout mouvement involontaire du siège du véhicule lorsque l'opérateur se lève temporairement du siège mais reste à proximité.

2. Système selon la revendication 1, comprenant également une console.

3. Système selon la revendication 1, dans lequel, si la valeur de facteur de mouvement est différente de la valeur souhaitée, le contrôleur de réglage de siège et de composants (12) signale à le au moins un actionneur contrôlable (22, 24, 26, 28) d'ajuster la au moins une de la position avant-arrière ou de la position en hauteur du siège du véhicule à la valeur souhaitée.

4. Système selon la revendication 3, dans lequel le au moins un actionneur contrôlable (22, 24, 26, 28) déplace le siège du véhicule d'une position actuelle à une position entièrement reculée.

5. Système selon la revendication 1, dans lequel le dispositif de détection de présence d'opérateur (10) est un capteur sur le siège du véhicule.

6. Système selon la revendication 1, comprenant également un dispositif d'entrée.

7. Système selon la revendication 6 dans lequel le dispositif d'entrée est une mémoire dans le contrôleur de réglage de siège et de composants (12) pouvant fonctionner pour stocker une position de siège avant-arrière ou une position de hauteur de siège souhaitée.

8. Système selon la revendication 7, dans lequel la valeur de position souhaitée avant-arrière du siège, ou la valeur de position en hauteur du siège souhaitée, ou les deux, est préchargée dans la mémoire.

9. Système selon la revendication 7, dans lequel la position avant-arrière souhaitée
du siège ou la hauteur du siège souhaitée est réglée par un opérateur.

10. Système selon la revendication 1 comprenant également une minuterie (21) du composant de temporisation.

11. Système selon la revendication 10 dans lequel la minuterie (21) a une valeur de temps de 0 ; 0,1 ; 0,25 ; 1 ou 10 secondes.

12. Système selon la revendication 11 dans lequel le contrôleur de réglage de siège et de composants (12) ne signale le au moins un actionneur contrôlable (22, 24, 26, 28) qu'après l'expiration de la valeur de temps.

13. Système selon la revendication 12 dans lequel le contrôleur de réglage de siège et de composants (12) réinitialise la valeur de temps de la minuterie (21) si le dispositif de détection de présence d'opérateur (10) mesure la présence d'un opérateur avant l'expiration de la valeur de temps.

14. Procédé de réglage d'un siège comprenant les étapes suivantes :
déterminer l'absence d'un opérateur sur le siège d'un véhicule ;
déterminer si une minuterie (21) a expiré en raison de l'absence de l'opérateur ;
déterminer au moins une de la position avant-arrière ou de la position en hauteur actuelle d'un siège de véhicule ;
calculer une valeur de facteur de mouvement en absence d'opérateur ;
activer un actionneur contrôlable (22, 24, 26, 28) pour déplacer le siège du véhicule vers une position souhaitée lorsque la valeur de facteur de mouvement est positive.

15. Procédé selon la revendication 14 dans lequel la position souhaitée est une position entièrement reculée.
